(19) Europäisches Patentamt
European Patent Office
Office européen des brevets

(11) **EP 4 231 199 A1**

(12) **EUROPEAN PATENT APPLICATION**

(43) Date of publication:
**23.08.2023 Bulletin 2023/34**

(51) International Patent Classification (IPC):
**G06N 3/04** *(2023.01)* **G06N 3/08** *(2023.01)*

(21) Application number: **22158015.2**

(52) Cooperative Patent Classification (CPC):
**G06N 3/084; G06N 3/0464;** G06N 3/048

(22) Date of filing: **22.02.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Dold, Dominik
2332LG Leiden (NL)**
• **Hildebrandt, Marcel
80634 München (DE)**
• **Mogoreanu, Serghei
81827 München (DE)**

(74) Representative: **Siemens Patent Attorneys
Postfach 22 16 34
80506 München (DE)**

(54) **METHOD AND DEVICE FOR PROVIDING A RECOMMENDER SYSTEM**

(57)  A recommender system is provided for which in the training initial user encodings and initial item encodings are used as trainable parameters.

This is opposite to the normal procedure, where weights of the encoder network are trained. The advantage thereof is that the computational complexity in the training process is significantly decreased thus that it can be employed on computationally restricted platforms such as end devices, FPGAs or ASICs.

FIG 3

$h_u^{(0)}, h_i^{(0)}$ — EN — $W_0^{(l)*}, W_1^{(l)*}$ — $h_u^{(L)}, h_i^{(L)}$ — DN — L

(1), (1')     (2)     (3)     (4), (4')     (5)

**Description**

**Field of the Invention**

The invention relates to a computer implemented method for providing a recommender system. The invention further relates to a corresponding computer program and recommendation device.

**Background**

For industrial applications, engineers often need to design a complex system or engineering project which comprises a multitude of interconnected components. The design of such a system is usually performed in engineering tools, which are run on a computer, and can be described as an iterative process of identifying components whose interplay will fulfill the functional requirements arising from the intended application of the overall system, introducing the identified components into the project, and connecting them to one another such that the resulting interconnected components allow the intended real-world application. The relation between components can be captured by graphs.

When it comes to designing a machine learning solution for such an engineering tool, e.g., a recommendation system for suggesting suitable components to engineers in the process of configuring an engineering system, one of the major challenges is finding a way to encode the irregular, inherently non-Euclidean topologies of graphs so that they can be easily exploited by machine learning models for various downstream tasks. 3333. This task becomes even more difficult in the presence of certain model deployment constraints.

A most commonly used approach for encoding graph structures is using graph neural networks which are denoted as GNNs. Recently, GNN-based models reached state-of-the-art performance on many recommendation tasks. The goal in these settings is to overcome the information overload which, e.g., is caused by a massive number of available items via personalized ranking and filtering methods.

Common industrial applications include product configurators for engineering systems. E.g., by Siemens a so-called TIA tool is provided by which selections can be made in dependence on whether e.g., a RTLS (real time locating system) or a handling system is designed, for each of which other components are used.

Another Siemens example is the DxDesigner tool suit used in the EDA (electronic design automation) domain, used e.g., for the design of electronic or electrical circuits.

A further example are clinical recommender systems in the health care domain.

Typically, GNNs possess a very large number of parameters, which has the consequence that training such a model is a very computationally intensive task.

This is not an issue when the training of the model can be done "offline", i.e., before the delivery to a customer, and when using purpose-built hardware, such as powerful GPUs (graphical processing units) designed specifically for scientific research.

However, if the use case for which the machine learning model is being designed requires the training procedure to be ran on the end customer hardware, the usage of graph neural networks may be difficult e.g., due to the following reasons:

- Data privacy concerns: the data may be deemed too sensitive to leave the end customer hardware for performing the training;
- Personalization: further training may be required to make a base machine learning model be tailored to a particular user;
- Incremental training: further, additional training to an already performed training may be required to improve the performance of the machine learning model in previously unseen scenarios.

For the training, GNN based methods are used, especially methods using graph convolutional networks (GCNs), which were first introduced in [1]. Many extensions to methods using GCNs have been proposed in academia, e.g.:

- [2] proposes FastGCN that allows for more efficient training on massive graphs,
- [3] proposes graph attention networks (GATs) that increase the expressivity of GCNs,
- GraphSAGE [4] can operate in the inductive setting. This means that nodes can be embedded during deployment which are not seen during training.

All these methods remain very computationally expensive. Citation [5] applies the idea of frozen and trainable weights in every layer for flexible and energy efficient retraining of convolutional neural networks (CNNs) in the area of computer vision.

Accordingly, it is an object of the present invention to provide a possibility to improve recommender systems usable for a plurality of users. Further, it is an object to provide a possibility for an effective training of such a recommender system.

**Brief Summary of the Invention**

This is achieved by what is disclosed in the independent claims. Advantageous embodiments are subject of the dependent claims.

According to a first aspect, the invention relates to a computer implemented method for providing a recommender system.

The recommender system provides to a user a set of items to each of which a certain score is assigned, so that e.g., items with the highest score are preferably presented to the user. This provision is based on encodings of nodes of which user nodes represent users and item nodes represent items. User nodes and item nodes are partly connected by edges by which a relation between users and items is described.

A score relates to a probability but is not necessarily normalized. This means e.g., that the scores would have to be calibrated.

The recommender system uses an architecture with neural networks.

A graph neural network, e.g., a graph convolutional neural network, is provided for as encoder network which encodes users and items. The users and items are each represented by a node. A user node is connected with a subset of the item nodes, which represents that there is an observed interaction between the user node and the specific item.

E.g., the user has used the item before in the design of an electric circuit.

The decoder network extracts from the encodings a prediction, i.e., a score for each item. The score represents how likely it is, that there will be an observed interaction between the user and that item.

This is possible because encodings produced by a graph neural network (GNN) use adjacency information. The encodings contain information about the center node, i.e., the respective user or item node, and neighborhood information, i.e., information about neighboring nodes. Thus, relations between the nodes can be captured.

According to an advantageous embodiment, this can be reflected by using two types of weights in a layer of the GNN, e.g., a first type of weight $W_0^{(l)}$ used when transforming center node information and a second type of weight $W_1^{(l)}$ used when including information from neighboring nodes

The recommender system is trained whereby initial user encodings and initial item encodings are used as trainable parameters.

This is opposite to the normal procedure, where weights of the encoder network are trained. The advantage thereof is that the computational complexity in the training process is significantly decreased, see also section "Advantages of the Training Method".

For an initial encoding of the nodes e.g., a vector with arbitrary entries might be used. The number of dimensions of this vector reflecting the number of considered features might correspond to the number of hidden layers of the encoder network.

The initial encodings are used as input to the encoder network. The weights of the encoder network are randomly initialized.

According to an advantageous embodiment they are at least partly frozen or/and set to zero. This further reduces computational complexity.

For the prediction extracted by the decoder network a loss function, is calculated which depends on the training objective.

According to advantageous embodiment, as training objective a "personalized ranking may be employed, i.e., a ranking of recommended items for a specific user.

Advantageously, as encoder network a feed forward neural network may be used.

According to an advantageous embodiment, in the decoder network a linear mapping is performed.

The prediction may be a vector where for each item an entry with a corresponding score is foreseen.

A prediction from the encodings of user nodes and item nodes is made for every user.

E.g., during the training, hidden interactions between a given user and a given item are explored by the recommender model. At different stages during training, a prediction will be made for every user thereby not only considering items the respective user has already been connected with but for every item every user has interacted with.

The loss function is defined such that higher scores are achieved if there is an observed interaction between a user and an item than if there is none.

The gradient of this loss function is at least partly evaluated and the effects of the initial encodings as trainable parameters on the loss function are determined.

In particular, by partly evaluated it is meant that the gradient in relation to the trainable parameters is determined. The gradient is used to adapt the initial encodings such that the loss function is in the course of the training minimized.

The gradient, which number of dimensions e.g., depends on the number of parameters that can be optimized, is determined.

This is done until a training exit criterion is met, e.g., a certain value of the loss function has been achieved or a certain number of training cycles has been performed.

This training process is efficient as the weights of the graph convolutional neural network are not changed during the training and thus numerous operations can be avoided and memory requirements can be reduced.

According to a further aspect, the invention relates to a corresponding computer program.

According to another aspect, the invention relates to a recommendation device. The recommendation device may be realized in software or/and hardware and at least partly deployed on a mobile device or device with limited computational capacities.

Alternatively or additionally, the recommender system may be accessible by this device via a communication interface. E.g., at least parts of the recommender system are provided by a server unit.

Even if the recommender system is described using two types of nodes, i.e., user nodes and item nodes, these two types of nodes may represent also, e.g., for a predictive maintenance system, for a component possible maintenance measures. In this case the component would correspond to a user node and the maintenance measures to an item node.

**Brief description of the drawings:**

Further embodiments, features, and advantages of the present invention will become apparent from the subsequent description and dependent claims, taken in conjunction with the accompanying drawings of which show:

Fig. 1 an example of a user-item interaction graph as an example for a graph having to classes of nodes;

Fig. 2 an example of an architecture for a recommender system using neural networks;

Fig.3 a schematic view of the proposed methods;

Fig.4 an efficiency gain of the exemplary embodiments of the proposed methods in respect to computation speed and memory reduction.

**Overview over the proposed Methods**

It is one object of the invention to provide a more efficient method for a training of GNN-based recommender systems. The proposed methods drastically reduce the computational complexity. Consequently, they allow for faster training especially on non-purpose-built hardware, e.g., on end-user devices. Moreover, sensitive information from user-item interactions, which are, e.g., captured in graph data can remain locally on the device.

One important aspect of the proposed approach is to randomly initialize and then freeze the weights of the graph neural network (GNN) and using initial encodings of user and items as trainable parameters.

According to an advantageous embodiment, the parameters of a task-specific decoder may still be tuned, i.e., changed during the training.

By task specific decoder is meant that the decoder was designed for a specific prediction task, e.g.an appropriated neural network architecture has been chosen, the decoder is adapted to outcome of the encoder network etc.

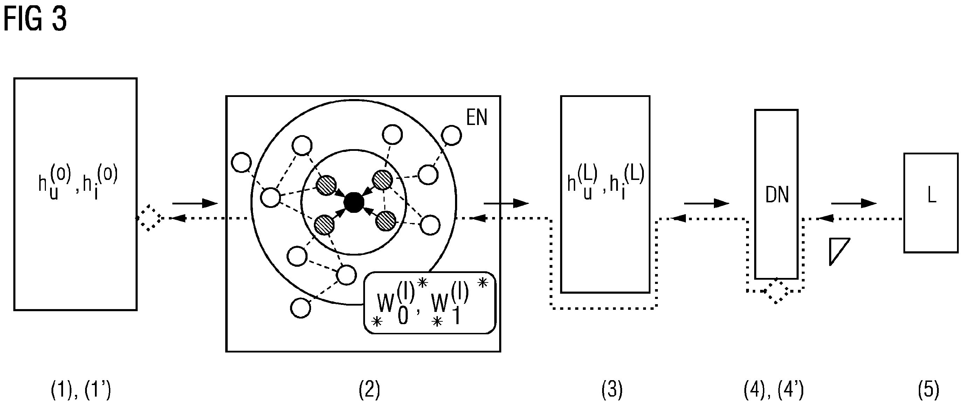

In addition, the proposed methods allow the gradient flow through the static graph neural network GNN, in particular a graph convolutional neural network GCNN, which allows to tune the initial node embeddings, see also Fig.3. In other words, the gradient is back propagated. In even other words, it is determined what influence the initial encodings have on the loss function from which the gradient is derived. Then, the initial encodings are modified such, that the loss function is minimized.

The underlying rationale is that a static, non-optimized GNN can still produce expressive node representations that can be exploited for downstream tasks if the remainder of the encoder-decoder architecture is optimized towards the static filter masks, i.e., the "frozen" or constant weight of the GNN.

By "downstream task" a supervised-learning task using forward propagation is meant that utilizes a pre-trained model or component.

An "expressive encoding" for a certain task denotes an encoding which allows to make the classification for this task.

Specifically, the proposed methods make use of the following components:

- A user-item interaction graph $G = (V,E)$, where $V = \{v_1, v_2, ... v_N\}$ denotes the vertex set, i.e., the nodes and $E \subset V \times V$ the edge set, i.e., the connections between the nodes. Here, $V \times V$ denotes the cartesian product of V and V, which is defined as set of all ordered pairs $(v_i, v_j)$, where $v_i, v_j$ is $\in \{v_1, v_2, ... v_N\}$.

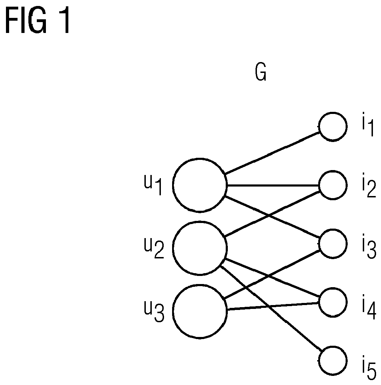

Such a user-item interaction graph is depicted in **Fig.1.** Each user $u_u$ where u= 1,2,3 is connected to a number of components $i_i$ where i= 1,2,3,4,5. A user is connected to some components, but not all components, e.g. $u_1$ is connected to $i_1$, $i_2$, $i_3$ but not to $i_4$ and $i_5$.

The graph G can comprise one or more user and a plurality, i.e., at least two items.

The graph G can be composed of several graphs where, e.g., for each graphs an individual user is connected to one or more items. The graphs may be disjunct, i.e., there is no overlap in users or/and items or connected by a common user or/and item.

In the example of the mentioned TIA system, in such a user-item interaction graph a first user $u_1$ is connected to a first controller as first item working at a specific first voltages. A second user $u_2$ is connected to a second controller working at a different voltage. For example, the task would be to predict, if a user that has used a first controller would also use in future a further component which he has not yet used. Information to help to predict this is contained in the adjacency information which can be taken from the connections between the various nodes.

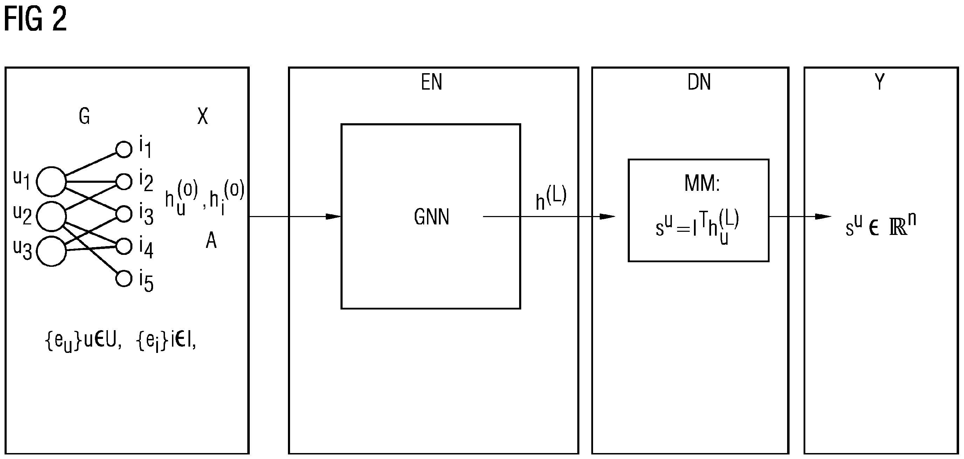

- A randomly initialized graph graph neural network which is referred to as GNN. As an advantageous embodiment, the GNN can be formed in all proposed methods by a graph convolutional neural network, which is referred to as GCNN. The GNN produces a d-dimensional vector space embedding for all nodes in $V$. This is exemplarily depicted in Fig.2, where the encoder network is comprises two graph convolutional network layers.

The goal is to provide optimum initial encodings of users and items which will be described in connections with the following embodiments. For "encoding", also the term "embedding" is used.

## Architecture of the Recommender System (Fig.2)

In Fig.2 a high-level schematic view of the architecture of a recommender system or model is depicted.

Overall, an exemplary architecture of the recommender system comprises an encoder network EN into which initial encodings of users and items are fed and further encoded, a decoder network DN which extracts from the encodings of users and items, a score that an item is connected to a user and an output entity which provides for each user a vector with scores relating to probabilities that the respective user is connected to a specific item.

For the training, a user-item interaction graph $G = (V,E)$ is used, from which input information X is derived.

The input information X comprises an initial encoding $h_u^{(0)}$ of user nodes and initial encodings $h_i^{(0)}$ of item nodes and adjacency information A, i.e., information about the connection between the nodes.

The adjacency information A can be provided by an adjacency matrix.

The initial embedding $h_u^{(0)}$, $h_i^{(0)}$ can be provided by a matrix where each line vector is the representation of a certain node, e.g., line 3 corresponds to a node 3, whereby the numbering is taken from the graph G. The entries of the line vector are randomly chosen. During the training entries are adjusted such that the graph G is described in suitable way.

Preferably, the number of columns or number of entries of the line vector respectively is the number of hidden dimensions of the encoder network EN. This hyperparameter is chosen often as a multiple of 2 as this is most memory efficient, mostly between 8 and 256.

This input data X comprising initial embedding $h_u^{(0)}$, $h_i^{(0)}$ and adjacency information A is fed into the encoder network EN. In the encoder network EN, by using the adjacency information A, for each node a contextualized encoding, i.e., an encoding taking into account neighborhood information is obtained. By "neighborhood information" the information which node is connected to which other nodes is meant. This is done for every user node $u_i$ and every item node $i_i$.

As encoder network EN a graph neural network referred to as GNN, in particular a graph convolutional neural network, referred to as GCNN is chosen.

The encoder network EN is randomly initialized, i.e., its weights are chosen at least partly randomly. E.g., the weights of one or more specific layers of the encoder networks are chosen all randomly or in each or a selection of layers a part of the weights is chosen randomly.

The encoder network EN produces a d-dimensional vector space encoding or embedding or for all nodes in V, whereby d denotes the number of features to be regarded. Preferably, it coincides with the number of hidden dimensions of the encoder network EN.

From the vector space encoding or embedding or for all nodes in V, in the decoder network DN a score is extracted that a user node is connected to an item node.

As prediction or result or output data Y a ranking of the items which are connected to a user is obtained, or in other words each item is assigned a score that it is connected to a user. If the prediction is correct, then there should be a high score for connected items and a low score for not connected items.

When doing calibrations or normalizations, the score relates to a probability.

In the case of one user, Y is a vector with a dimension equal to the number of items.

In the case of many users, Y is a matrix $\in \mathbb{R}^{I \times U}$ where I is the number of items and U is number of users.

The vector or matrix Y is indexed, which means that e.g., each row corresponds to a specific item. The entry in that row represents the score that this item is connected to the user

## Training of the Recommender System (Fig.3)

In Fig.3 a schematic flow chart of the proposed method is depicted.

At reference sign (1), the initial encodings $h_i^{(0)}$ for the sets of $n$ users U = $\{u_1, u_2, \cdots, u_n\}$ and m items I = $\{i_1, i_2, \cdots, i_m\}$, respectively are provided, whose relations can be captured using an adjacency matrix A of graph G. $G$ = $(V,E)$ is an undirected bipartite user-item interaction graph as depicted in Fig.1. Bipartite means having two parts, namely the users and the items. The vertex set is given by $V = U \cup I$, i.e., the user nodes and the item nodes. Moreover, an edge $\{u,i\} \in E$ is drawn if and only if the user $u \in U$ has interacted with item $i \in I$. To ease the notation, with $e_u \in \mathbb{R}^d$ the encoding or embedding of a generic user $u \in U$ is denoted and with $e_i \in \mathbb{R}^d$ to represent the encoding of an item $i \in I$.

In this setting, the recommendation task consists of predicting the users' preferences towards new items, i.e., items he has not chosen before, given the user-item interaction graph $G$ (i.e., predicting links in G). In other words, what can be taken from the interaction graph are the user's past preferences or links or connections to items. From this, future preferences are to be derived in a prediction task.

At reference sign (2), as a next step the GNN is employed to produce contextualized encodings, i.e., low-dimensional vector space representations of both the users and items.

They are low-dimensional because only specific relations, e.g., relations of a user to a number of specific items are considered, which are provided by the neighborhood information, e.g., by the adjacency matrix A. Referring e.g., to Fig.1, for user $u_1$ only the relations to the connected items $i_1$, $i_2$ and $i_3$ are considered, for item $i_3$ only the relations to the connected users $u_1$ and $u_3$ are considered.

The GNN takes as input the initial encodings of a given center node (i.e., $\{e_u\}_{u \in U}$ for users or $\{e_i\}_{i \in I}$ for items) and the encodings of its neighboring nodes produces a context-aware encoding.

In the following the formation of a user's encodings is detailed. Computations for the item's encoding follow analogously. $h_u \in \mathbb{R}^d$ denotes the encoding of a user formed by the (l+1)-th layer of the GNN according to equation (1):

$$h_u^{(l+1)} = \sigma \left( \frac{1}{|N_u|} \sum_{i \in N_u} W_1^{(l)} h_i^{(l)} + W_0^{(l)} h_u^{(l)} \right)$$

where $N_u$ denotes the graph neighborhood of u , i.e., the set of all configured items of the user. In other words, $|N_u|$ denotes the number of items connected to a user.

$\sigma$ is a sigmoid function, given by $\sigma(t) = 1/(1+e^{-t})$

The initial features are denoted by $h_u^{(0)}$, $h_i^{(0)}$, and given by a matrix where each row represent a node as set out above.

According to an advantageous embodiment, the weight matrix $W^{(l)}$, where 1 denotes an individual layer from 1 to L is randomly initialized according to some distribution (e.g., using Xavier initializations). The weight matrix is not trained further, i.e., no adaptations to $W_i^{(l)}$ , where i= 0,1 and 1= 1, L are made due to the training, the weights $W^{(l)}$ are kept constant or are "frozen", as indicated by the asterisks.

The result thereof, at reference sign (3) are final encodings $h_u^L$ , $h_i^{(L)}$ which enter the decoder network DN at reference sign (4) .

This means that the trainable parameters are tuned by gradient descent of the initial item and user encodings via backpropagating the gradient induced by the loss function (see below) through the layers of the GNN without changing the weight matrices $W^{(l)}$. In other words, the initial encodings are adapted, so that the result of the prediction is better.

For a backpropagation it is determined, which element, e.g., initial encoding has what influence on the value of the loss function. In contrast, for a usual forward pass a prediction would be calculated, a loss function would be determined, and the weights would be adapted to minimize the loss function, by using its gradient, and thus optimize the prediction.

In other words, the set of trainable parameters comprises all user encodings $\{e_u\}_{u \in U}$ and all item encodings $\{e_i\}_{i \in I}$, respectively) but does not include the weight matrices of the GNN.

The inventors have found in test realizations, that excluding the GNN weights from training is not problematic, as the neighborhood aggregation operation, the most important part of the GNN layer which accumulates information from neighboring nodes, is still intact. The accumulation can be done, e.g., by using sum or mean operators on the neighborhood information.

Therefore, instead of adjusting the GNN weights, the initial encodings "learn" to utilize the -at least partly- "frozen" GNN weights, i.e., the initial encodings basically take a shape that is compatible with the random GNN weights and utilize them to create more expressive encodings instead of the GNN weights adjusting to important features of the initial encodings. The "frozen" state is indicated by the asterisks around the weights.

Thus, assuming the GNN has L layers, to produce scores for every item, at reference (4) in the decoder network DN a matrix multiplication MM is performed

$$s^u = I^T h_u^{(L)} \quad (2)$$

which corresponds to a linear decoding step.

The matrix $I \in \mathbb{R}^{d \, x \, m}$ contains encodings of the items formed by the GNN in analogy to equation (1), thus the column vectors are the encodings $h_i^{(L)}$ . The encoding $h_i^{(l+1)}$ are formed by the equation (1') below, where 1 =0, ..., L-1:

$$h_i^{(l+1)} = \sigma \left( \frac{1}{|N_i|} \sum_{k \in N_i} W_1^{(l)} h_k^{(l)} + W_0^{(l)} h_i^{(l)} \right)$$

$N_i$ denotes the graph neighborhood of $i$ , i.e., set of all users who are connected to an item and $|N_i|$ the respective number. $s^u \in \mathbb{R}^n$ is a recommendation vector for a specific user u which provides a scores for each item. σ is again the sigmoid function.

According to an advantageous embodiment the score is calibrated so that it reflects a probability.

That means, that -after the training has been performed- to a user whose connections in the past were known, a score and therewith also probability can be extracted what he will choose in the future. The reasoning behind is, that e.g. if it is a finding that item $i_1$ is often chosen together with item $i_2$, then it is likely that a user already connected to item $i_1$ will choose in future also item $i_2$, even if there is not yet a connection.

$s^u$ can be written also as $s^u$ = ((score)$_{item \, 1}$, (score)$_{item \, 2}$, .... (score)$_{item \, n}$)$^T$. In other words, there are indexed scores that can be attributed to a specific item.

E.g., in a design program, the items or components that come with the highest scores would be recommended to a user.

Thus, for an engineering tool, only the most relevant items corresponding to the items to which the highest score is assigned can be displayed at a certain design step. This makes the design process more efficient as the user is not lost in irrelevant details, e.g., having to choose between hundreds of items which he can connect, because the "offering" of connectable items by the engineering tool but would be wrong or not be useful to be connected, e.g., in an oscillating circuit a completely wrong dimensioned inductivity.

Therefore, the proposed method also helps to avoid errors.

According to an advantageous embodiment, the efficiency of the training can be further improved by introducing sparsity on the GNN weights, i.e., setting a fraction of weights permanently to zero so they have no effect.

This reduces the number of operations required in calculations that use these weights such as matrix-matrix or matrixvector products if the implementation is optimized for handling sparse matrix operations. E.g., the implementation can be a software framework or on hardware device, in particular a device having limited computational power.

According to an advantageous embodiment, for the training process, it is sought to reproduce the whole graph G by a part of the graph. Therefore, items in G are randomly deleted and the model is trained to produce high scores for the previously deleted items. This means, that a reconstructed graph would show the same connections between the nodes as the original graph $G$.

In the training process it is tried to enhance the predictions, which is done by minimization of a loss function L which is depicted at reference sign (5).

Among other candidates one can employ the "Personalized Ranking" as a training objective, i.e., using the following loss function L, which is to be minimized:

$$L = -\sum_{u \in U} \sum_{i \in N_u} \sum_{j \neg \in N_u} log(\sigma(s_i^u - s_j^u)). \quad (3)$$

$N_u$ denotes, as said above, the graph neighborhood of u , i.e., all configured items of the user or, in other words, the items connected to that user.

$\sigma$ denotes again the sigmoid function.

That means, during training the trainable components of our architecture are fit such that observed interaction (i.e., the "connected" items $i \in N_u$) receive a higher score than unobserved interactions ("unconnected "items $j \neg \in N_u$).

The equation (3) can be minimized with respect to $\{e_u\}_{u \in U}$ and $\{e_i\}_{i \in I}$ using stochastic gradient descent along with automatic differentiation techniques contained in the standard deep learning libraries that allow freezing a subset of the parameters.

If equation (3) is minimized with respect to $\{e_u\}_{u \in U}$ and $\{e_i\}_{i \in I}$ then, since $\{e_i\}_{i \in I}$ corresponds both to the initial item encodings which are passed to the encoder and the trainable parameters of the decoder network, the whole architecture (i.e., both the encoder and decoder components) is trained end-to-end.

"Stochastic gradient descent" denotes an iterative method by which the loss function L is treated as analytical function and therefore differentiations and integrations can be calculated at least for portions of the functions.

This gradient, denoted as $\nabla$, is at reference sign (4') back-propagated to the decoder network DN, where the decoder parameter can be adjusted in accordance with gradient information. The adjustment is depicted by the diamond shaped square in the dotted line leading back.

There are no adaptations to the weights in the encoder network EN made, but, shown at reference sign (1') by the diamond shaped square at the dotted line, adaptations to the initial encodings $h_i^{(0)}$ .

Thus, as a result optimized initial encodings $h_u^{(0)}$ . $h_i^{(0)}$ are obtained, describing user encodings $\{e_u\}_{u \in U}$ and item encodings $\{e_i\}_{i \in I}$.

These encodings or embeddings can be used then for further prediction tasks without having trained the GNN weights themselves, which is, as said before, computationally intensive.

An example for a prediction task is the prediction of future items a user will choose. A further example would be the automatic assignment of components to categories or the prediction of technical attributes.

**Further exemplary embodiments of the proposed Methods and Architectures**

The proposed methods can be realized in software. The application of the proposed methods can be seen in software realizations by looking at the model parameters after the training, i.e., the GNN weights will follow some random rule which was used for initialization, while the decoder parameters will have a specific shape obtained from the training process, which can be evaluated by looking at the statistics of the respective parameters.

An inclusion of the proposed architecture and application of the method is possible also in an application-specific hardware realization, like FPGAs, ASICs, neuromorphic hardware like Intel's Loihi. Therefore, the circuits need to be specified accordingly.

For hardware implementations too, the use of a proposed method can be derived as described above for software implementations.

The proposed architecture and methods are particularly suited for application-specific hardware realization, because the architecture with the frozen weights allows more efficient and simpler implementation of graph convolutions.

Examples in which areas the proposed methods can be applied, are the healthcare sector or the engineering sector.

The applications can run on a mobile and predict for the engineer the next item to use when repairing an entity.

In the health care sectors a treatment may be proposed which is based on the user's input.

E.g., a therapy would correspond then to an item a user connects in future. The user's symptoms, which are entered into or captured by sensors of the mobile device, would correspond to items a user has already connected to a person having a certain symptoms.

According to another advantageous embodiment the recommender system is adapted for predictive maintenance actions.

Then, instead to a user, to a component various "factor items" would be connected. These "factor items" would constitute on one hand factors deteriorating the components and on the other hand possible maintenance measures.

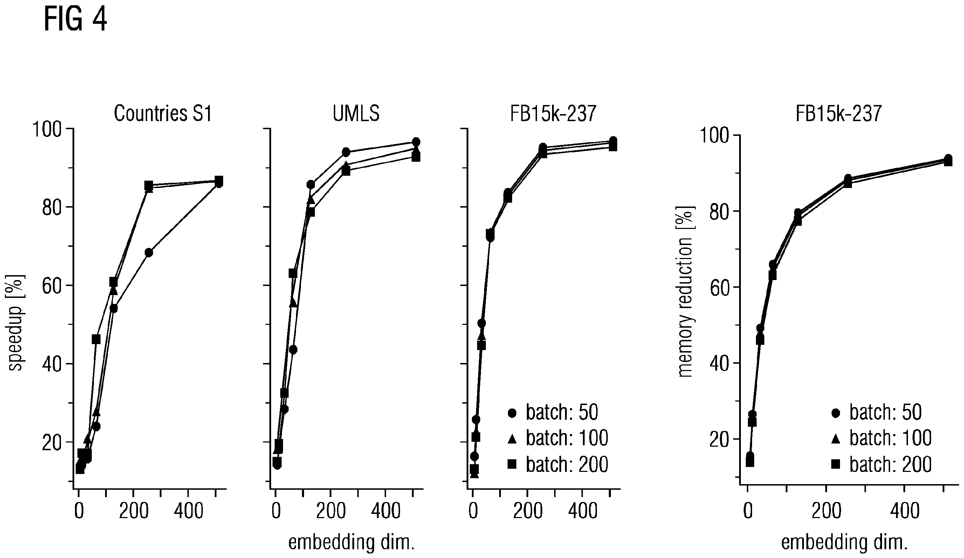

## Advantages of the Training Method (Fig.4)

The proposed method leads to an efficiency-gain which can be determined by measuring the speed required for the backward pass, i.e., the training steps, which increases. For testing and proving that, several well-known graph learning benchmarks were used. However, experimental tests have shown that the results are not dependent on the benchmark data set and can be transferred to the discussed use case.

As graph learning benchmarks standard data sets are used, e.g., countries S1, UMLS or FB15k-237. For example, the FB15k dataset contains knowledge base relation triples and textual mentions of Freebase entity pairs. It has a total of 592,213 triplets with 14,951 entities and 1,345 relationships. FB15K-237 is a variant of the original dataset where inverse relations are removed, since it was found that many test triplets could be obtained by inverting triplets in the training set.

The proposed training method leads to a significant reduction of training time or speedup, especially for larger and more expressive encoding or embedding dimensions, with speedups of up to 90%.

When determining the speedup, the performance of two systems processing the same problem is compared. Here the comparison takes place with regard to a standard training where the weights of the encoder network are adapted.

In addition, the maximum memory required by an operation in the backward pass is also decreased drastically, because the operations with the multitude of weights are not required, see below. Hence both the memory requirement which may constitute a bottleneck especially for end devices or use specific devices such as FPGA's as well as the computation time for training can be reduced drastically.

For the presented benchmark cases, the obtained performance with frozen weights is equivalent to the one obtained with trained weights. The obtained gain in efficiency is mostly attributed to the reduced complexity and the reduced number of operations in the backward pass. Since the GNN weights are frozen, the gradient is only calculated through them, and gradients with respect to the GNN weights are not calculated. In other words, the weights are used to compute the gradient of the initial encodings, i.e., the loss signal is being back-propagated through the weight matrices. However, the gradient is not computed, i.e., how the loss changes with respect to the weight matrices since the weight matrices are frozen.

If GNN weights are not frozen, gradients must be calculated and stored for them, which scale quadratically with the embedding dimension and hence become very inefficient for larger embedding dimensions.

In Fig. 4 for the left three drawings the speedup in percentage with relation to a standard training involving weights adaptation is depicted for the above-mentioned standard data sets countries S1, UMLS, FB15k-237 versus the number of embedding or encoding dimensions. The drawing on the right shows the memory reduction versus number of embedding dimensions when using FB15k-237. The achieved speed-up and memory reduction rises steeply with an increasing number of embedding dimensions, before going in saturation.

## Performance of the Method with the Trained System and Advantages

When the recommender system has been trained and is being used, then the input data X would be a specific node encoding which had been derived in the training.

The output data Y would a vector, where for each item that was existent in the user item interaction graph G used for the training and was not yet connected to the user, a score is provided that the user will in future connect to said item.

As said before graph neural networks are the de-facto standard approach for encoding graph structures. This is because they are extremely powerful and - when provided with sufficiently rich contextual information and enough training examples - are capable of encoding substantially more complex dependencies between the components than can be easily specified by even very skilled domain experts.

However, due to their inherent computational complexity, graph neural network-based methods may be not suitable for certain use cases that require the training to be done on-premises as opposed to in the cloud. This is particular true when for the training end devices such as mobile phones, laptops, notebooks, PCs or similar are used which have limited computational power.

By on-premises also training on a, as the use case may be, computationally restricted device is understood.

By the proposed training this problem is alleviated, thus allowing data scientists to apply graph neural network-based approaches in a wider variety of use cases. Tests have shown, that the application of a recommender system according to any of the described embodiments could reduce the error rate in design and reduce the time needed for completing a design.

In the context of this application, the design produced by using a recommender system is applied to manufacture e.g., a new hybrid car, an electronic component or circuit, electric design, design of a production street, design of a molecule etc. or parts thereof, if it suffices the requirements for the respective product, e.g., in view of functionality. Thus, the efforts in manufacturing and hence the costs can be reduced because the design obtained by the engineering tool can be analyzed in the relevant aspects beforehand.

The term "recommendation device" may refer to a computer on which the instructions can be performed.

The term "computer" may refer to a local processing unit, on which the client uses the engineering tool for designing purposes, as well as to a distributed set of processing units or services rented from a cloud provider. Thus, the term "computer" covers any electronic device with data processing properties, e.g., personal computers, servers, clients, embedded systems, programmable logic controllers (PLCs), FPGAs, ASICs handheld computer systems, pocket PC devices, mobile radio devices, smart phones, devices or any other communication devices that can process data with computer support, processors and other electronic devices for data processing. Computers may comprise one or more processors and memory units and may be part of a computer system. Further, the term computer system includes general purpose as well as special purpose data processing machines, routers, bridges, switches, and the like, that are standalone, adjunct or embedded.

The term "user" may in particular refer to an individual, a group of individuals sharing at least a part of properties or features or a company.

In the foregoing description, various aspects of the present invention have been described. However, it will be understood by those skilled in the art that the present invention may be practiced with only some or all aspects of the present invention. For purposes of explanation, specific configurations are set forth in order to provide a thorough understanding of the present invention.

However, it will also be apparent to those skilled in the art that the present invention may be practiced without these specific details.

Parts of the description will be presented in terms of operations performed by a computer system, using terms such as data, state, link, fault, packet, and the like, consistent with the manner commonly employed by those skilled in the art to convey the substance of their work to others skilled in the art. As is well understood by those skilled in the art, these quantities take the form of electrical, magnetic, or optical signals capable of being stored, transferred, combined, and otherwise manipulated through mechanical and electrical components of the computer system.

Additionally, various operations have been described as multiple discrete steps in turn in a manner that is helpful to understand the present invention. However, the order of description should not be construed as to imply that these operations are necessarily order dependent, in particular, the order of their presentation.

Reference in the specification to "one embodiment" or "an embodiment" means that a particular feature, structure, or characteristic described in connection with the embodiment is included in at least one embodiment of the invention.

The appearances of the phrase "in one embodiment" in

various places in the specification are not necessarily all referring to the same embodiment.

## List of Denotations and abbreviations

A: Adjacency Matrix, used to represent connections/links/edges between nodes in a graph. In A, for each node there is row and a column, and the entry is e.g., 1 if there is a connection and 0 if there is none.

$E \subset V \times V$: edge set wherein an edge $\{u, i\} \in E$ is drawn/exists/considered only if user $u \in U$ has interacted with item $i \in I$.

Embedding: used synonymously with "encoding"

$e_i \in \mathbb{R}^d$ : representation of an embedding of an item $i \in I$.

$e_u \in \mathbb{R}^d$ : representation of an embedding of a generic user $u \in U$

$\{e_u\}_{u \in U}$: set of all user embeddings

$\{e_i\}_{i \in I}$: set of all items embeddings

$G = (V,E)$ : User-item interaction graph where $V = \{v_1, v_2, ... v_N\}$ denotes the vertex set and $E \subset V \times V$ the edge set. $G$ is considered as undirected, bipartite, i.e., having a user part and an item part

GCNN: graph convolutional neural network

GNN: graph neural network

$h_u^{(l+1)} \in \mathbb{R}^d$ : embedding of a user formed by the (l+1)-th layer of the GCNN according to equation (1)

$$h_u^{(l+1)} = \sigma\left( \frac{1}{|N_u|} \sum_{i \in N_u} W_1^{(l)} h_i^{(l)} + W_0^{(l)} h_u^{(l)} \right)$$

$h_u^{(0)}$ : initial embedding or encoding of a user or an item, given by an embedding lookup

$I = \{i_1, i_2, \cdots, i_m\}$: set of m items

$I \in \mathbb{R}^{d \times m}$ : contains embeddings of the items formed by the GCNN in analogy to equation (1) and with $\sigma$ denoting the sigmoid function i.e., equation (1'):

$$h_i^{(l+1)} = \sigma\left( \frac{1}{|N_i|} \sum_{u \in N_i} W_1^{(l)} h_u^{(l)} + W_0^{(l)} h_i^{(l)} \right)$$

$L = - \sum_{u \in U} \sum_{i \in N_u} \sum_{j \neg \in N_u} log(\sigma(s_i^u - s_j^u))$ : loss function used when personalized ranking is training objective

$N_u$ : denotes all graph neighborhood of u (i.e., all configured items of the user or in other words items he is connected to)

$N_i$ : denotes all graph neighborhood of items for which a connection to the user is made

$s^u = I^T h_u^{(L)}$ , $s^u \in \mathbb{R}^n$ : is a vector of recommendation scores for each item. It is obtained by a matrix multiplication corresponding to a linear decoding step for a GCNN with L layers.

$U = \{u_1, u_2, \cdots, u_n\}$ : set of n users

u: user

$V = \{v_1, v_2, ... v_N\}$: vertex set

$W^{(l)}$: weight matrix, randomly initialized according to some distribution (e.g., using Xavier initializations) but not trained any further.

**List of citations:**

[1] T. N. Kipf and M. Welling. Semi-supervised classification with graph convolutional networks, arXiv:1609.02907, 2016.

[2] J. Chen, T. Ma, and C. Xiao. FastGCN: fast learning with graph convolutional networks via importance sampling, arXiv:1801.10247, 2018.

[3] P. Veličkovic, G. Cucurull, A. Casanova, A. Romero, P. Lio, and Y. Bengio. Graph attention networks, arXiv:1710.10903, 2017.

[4] W. Hamilton, Z. Ying, and J. Leskovec. Inductive representation learning on large graphs, Advances in neural information processing systems, pages 1024-1034, 2017.

[5] L.F. Isikdogan et al. "SemifreddoNets: Partially Frozen Neural Networks for Efficient Computer Vision Systems." Computer Vision-ECCV 2020: 16th European Conference, Glasgow, UK, August 23-28, 2020, Proceedings, Part XXVII 16. Springer International Publishing, 2020. S. 193-208.

**Claims**

1. Computer implemented method for providing a recommender system (RS) for recommending an item ($i_i$) out of a variety of items to a user,

   - said recommender system (RS) using an architecture with an encoder network (EN) and a decoder network (DN),

      - said encoder network (EN) comprising a graph neural network (GNN) providing encodings of users and items,

         said users and items being represented by nodes, whereby a user node is connected with a subset of the item nodes,
         said encodings capturing relations between a center node and other nodes;

   - said decoder network (DN) extracting, for each item, from the encodings a score that an item is connected to the user;

   - said recommender system being trained by performing the following training steps:

      a. providing (1), for each user node and each item node an initial encoding $(h_u^{(0)}, h_i^{(0)})$ said initial encodings being used as trainable parameters;

      b. using (2), by said encoder network (EN), adjacency information (A) and the initial encodings $(h_u^{(0)}, h_i^{(0)})$ as input to produce (3) contextualized encodings $(h_i^{(L)}, h_u^{(L)})$ of each item and each user node,

         said adjacency information (A) gained from the connections between nodes, and
         said contextualized encodings $(h_i^{(L)}, h_u^{(L)})$ reflecting the relations between a center node and other nodes,
         whereby at least a part of the weights of the encoder network (EN) is initialized in a random manner;

      c. obtaining (4), for all users, from said contextualized encodings $(h_i^{(L)}, h_u^{(L)})$ for each item ($i_i$), by the decoder network (DN) a prediction ($s^u$) whether an item node is connected to a specific user node, said prediction ($s^u$) being expressed by a score assigned to the respective item node;

d. calculating (5) a loss function (L) for that prediction ($s^u$), whereby the loss function (L) is defined such that, in the prediction ($s^u$), items ($i_i$) for which an item node has a connection to the user node are assigned a higher score than items for which there is no connection;

e. deriving from the loss function (L) at least partly a gradient ($\nabla$);

f. determining (1') the effect of the trainable parameters on the loss function (L) by using the gradient ($\nabla$);

g. adapting the trainable parameters by use of the gradient ($\nabla$) such that the loss function (L) is minimized;

h. repeating the steps a) through g) until a training exit criterion is met.

2. Method according to the previous claim, wherein as exit criterion at least one of the following is taken:

   - a predetermined value of the loss function (L);
   - a change in the loss function after a repetition of steps a) through g);
   - a predetermined number of iterations of steps a) through g);
   - a predetermined accuracy of the prediction is achieved with regard to a validation set, wherein for said validation set predictions are made for already known results and thus the accuracy of the prediction by the recommender system can be determined.

3. Method according to any of the previous claims wherein for an initial encoding $(h_u^{(0)}, h_i^{(0)})$ of a node a vector having as entries arbitrary numbers is taken.

4. Method according to any of the previous claims wherein at least a part of the weights of the encoder network (EN) is kept constant after the initialization.

5. Method according to any of the previous claims wherein the random initializing of the weight matrix in b) is done according to some distribution, in particular using Xavier initializations.

6. Method according to any of the previous claims wherein for the random initializing of weight matrix in b) a subset of the weights is permanently set to zero.

7. Method according to any of the previous claims wherein the training objective is a personalized ranking represented by a loss function L which is formed by

$$L = -\sum_{u \in U} \sum_{i \in N_u} \sum_{j \neg \in N_u} log(\sigma(s_i^u - s_j^u)) \quad (3)$$

wherein

u denotes a user u within the group U of users,

i is a running variable denoting items for which there is a connection between the item node and the respective user node,

$N_u$ is the number of items, for whose item nodes there is a connection to the user nodes and

j is a running variable for items where there is no connection between the item node and the user node,

$s_i^u \in \mathbb{R}^n$ is a prediction vector providing recommendation scores for each item i for which there is a connection and

$s_j^u \in \mathbb{R}^n$ is a prediction vector providing recommendation scores for each item j for which there is no connection between item node and the respective user node and

$\sigma$ denotes a sigmoid function.

8. Method according to the previous claims, wherein the extraction of the scores in the decoder network is done by a matrix multiplication $s^u = I^T h_u^{(L)}$

wherein L is the number of layers of the graph convolutional network (GCN), the matrix $I \in \mathbb{R}^{d \times m}$, where d is the number of hidden dimensions of the encoder network,

m is the number of items

and the matrix $I \in \mathbb{R}^{d \times m}$ contains embeddings $h_i^{(L)}$ of the items formed by the encoder network (EN) according to:

$$h_i^{(l+1)} = \sigma\left(\frac{1}{|N_i|}\sum_{u \in N_i} W_1^{(l)}\mathrm{h}_u^{(l)} + W_0^{(l)}h_i^{(l)}\right)$$

where $\sigma$ denotes the sigmoid function
where $N_i$ is the set of items for which a connection to the user is made,
$\mathrm{h}_u^{(l)}$ and $h_i^{(l)}$ is an encoding of a user or item respectively formed by the 1-th layer of the network according to, where $1 = 0,1,...,L-1$:

$$h_u^{(l+1)} = \sigma\left(\frac{1}{|N_u|}\sum_{i \in N_u} W_1^{(l)}\mathrm{h}_i^{(l)} + W_0^{(l)}h_u^{(l)}\right)$$

$\mathrm{h}_i^{(l)}$ is an encoding of an item formed by the l-th layer of the network,

$W_0^{(l)}$ is the weight matrix used at the l-th layer to transform the respective center node information from the previous layer and

$W_1^{(l)}$ is the weight matrix used at the l-th layer to include the information from neighboring nodes $N_u$ is the set of items a user is connected to.

9. Method according to any of the previous claims wherein as graph neural network (GNN) a graph convolutional neural network is chosen.

10. Method according to any of the previous claims wherein as trainable parameter also the parameters of the decoder network (DN) are taken.

11. Method according to any of the previous claims wherein for the training one of the following is performed:

- the available data set is split in at least two parts, whereof one part is used for the training and a second part as validation set, for which predictions are made on basis of the training set, a quality of said predictions being determined using the validation set;
- only a part of the known relations between user nodes and item nodes are considered and the trainable parameters are chosen such, that the not considered part of the relations is reconstructed.

12. Method according to any of the previous claims wherein the recommender system (RS) is deployed or/and trained on at least one of

- a hardware platform having restricted computing capabilities, in particular a platform not equipped or not sufficiently equipped with graphical processing units;
- an application specific hardware platform, in particular a platform using at least one FPGA, an ASIC or neuromorphic hardware;
- a mobile device, in particular a laptop, a tablet or a smartphone.

13. Computer program comprising program instructions that cause, when the program is executed by a computer, the computer to carry out a method according to any of the previous claims.

14. Recommendation device, wherein the recommendation device stores or/and provides the computer program according to the previous claim, said recommendation device having a communication interface via which entries used in the program can be made or/and by which access to a platform is granted on which the computer program is performed, said recommendation device for use in at least one of the following:

- an engineering tool for the design of a complex system comprising variety of items proposing a selection of items to a specific user which are used at a design step, said selection having yielded a score lying above a predetermined threshold;
- a treatment recommender proposing a treatment for a specific user;
- a treatment recommender proposing a maintenance action for a certain component, said component being represented by a user node.

15. Recommendation device according to the previous claim, which is used for an engineering tool, which recommends items to be added in a step in the design process, said recommending being realized by a menu in which only a subset of items with a score over a predefined threshold is displayed.

# FIG 1

# FIG 2

EP 4 231 199 A1

# FIG 3

$h_u^{(0)}, h_i^{(0)}$

EN

$W_0^{(l)}{}^*, W_1^{(l)}{}^*$

$h_u^{(L)}, h_i^{(L)}$

DN

L

(1), (1')  (2)  (3)  (4), (4')  (5)

EP 4 231 199 A1

18

FIG 4

Europäisches
Patentamt

European
Patent Office

Office européen
des brevets

## EUROPEAN SEARCH REPORT

Application Number

**EP 22 15 8015**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/220128 A1 (BENEVOLENTAI TECH LIMITED [GB]) 21 November 2019 (2019-11-21) * paragraph [0019] * * paragraph [0075] – paragraph [0178] * * figures 1a-2 * | 1-15 | INV. G06N3/04 G06N3/08 |
| A | CN 113 222 700 A (NAT UNIV DEFENSE TECHNOLOGY PLA) 6 August 2021 (2021-08-06) * paragraph [0060] – paragraph [0097] * * figures 1, 2 * | 1-15 | |

TECHNICAL FIELDS SEARCHED (IPC)

G06N

The present search report has been drawn up for all claims

| Place of search | Date of completion of the search | Examiner |
|---|---|---|
| The Hague | 15 August 2022 | Baldan, Marco |

EPO FORM 1503 03.82 (P04C01)

## ANNEX TO THE EUROPEAN SEARCH REPORT
## ON EUROPEAN PATENT APPLICATION NO.

EP 22 15 8015

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2022

| Patent document cited in search report | | Publication date | Patent family member(s) | | Publication date |
|---|---|---|---|---|---|
| WO 2019220128 | A1 | 21-11-2019 | CN | 112119412 A | 22-12-2020 |
| | | | EP | 3794511 A1 | 24-03-2021 |
| | | | US | 2021081717 A1 | 18-03-2021 |
| | | | WO | 2019220128 A1 | 21-11-2019 |
| CN 113222700 | A | 06-08-2021 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. N. KIPF ; M. WELLING.** Semi-supervised classification with graph convolutional networks. *arXiv:1609.02907,* 2016
- **J. CHEN ; T. MA ; C. XIAO.** FastGCN: fast learning with graph convolutional networks via importance sampling. *arXiv:1801.10247,* 2018
- **P. VELIČKOVIC ; G. CUCURULL ; A. CASANOVA ; A. ROMERO ; P. LIO ; Y. BENGIO.** Graph attention networks. *arXiv:1710.10903,* 2017

- **W. HAMILTON ; Z. YING ; J. LESKOVEC.** Inductive representation learning on large graphs. *Advances in neural information processing systems,* 2017, 1024-1034
- SemifreddoNets: Partially Frozen Neural Networks for Efficient Computer Vision Systems. **L.F. ISIK-DOGAN et al.** Computer Vision-ECCV 2020: 16th European Conference, Glasgow, UK, August 23-28, 2020, Proceedings, Part XXVII. Springer International Publishing, 23 August 2020, vol. 16, 193-208